# EUROPÄISCHE PATENTSCHRIFT

(11) **EP 0 662 566 B1**
(45) Veröffentlichungstag und Bekanntmachung des Hinweises auf die Patenterteilung: **01.09.1999**
(21) Anmeldenummer: 94120984.3
(22) Anmeldetag: 31.12.1994
(51) Int. Cl.: F15B 15/08

(54) **Linearantrieb**
Linear drive
Entraînement linéaire

(30) Priorität: 11.01.1994 DE 4400453
(43) Veröffentlichungstag der Anmeldung: 12.07.1995
(73) Patentinhaber: Invest Tech AG, 6341 Baar (CH)
(72) Erfinder: Lipinski, Reinhard, D-73207 Plochingen (DE)
(74) Vertreter: Rüger, Rudolf, Dr.-Ing.

(56) Entgegenhaltungen:
- EP-A- 0 104 364
- EP-A- 0 345 506
- DE-A- 3 429 783

## Beschreibung

Die Erfindung betrifft einen Linearantrieb mit den Merkmalen des Oberbegriffs des Patentanspruches 1 bzw. 2.

Als Linearantriebe sind aus der Praxis sogenannte Linearmodule bekannt, bei denen in einem langgestreckten, seitlich geschlitzten Führungsrohr über Druck- oder Zugmittel ein Schlitten oder Kolben bewegt wird. Der Schlitten oder Kolben ist mit einem Steg fest verbunden, der den in dem Führungsrohr vorgesehenen Längsschlitz durchgreift und der gegebenenfalls in Verbindung mit einem an dem Führungsrohr außen gelagerten Schlitten als Abtrieb dient.

Obwohl dieser Linearantrieb lediglich zur Erzeugung von Linearbewegungen vorgesehen ist, können je nach Art der Krafterzeugung und je nach Art der angeschlossenen Last seitlich auf den Steg einwirkende Kräfte entstehen, die den Steg mit den Flanken des in dem Führungsrohr vorgesehenen Längsschlitzes möglicherweise in Berührung bringen. Dies ist beispielsweise der Fall, wenn seitlich an dem Steg angreifende Lasten nicht durch zusätzliche, genügend steif ausgelegte Führungsmittel aufgefangen werden.

Außerdem kann eine seitlich auf den Steg einwirkende Kraft entstehen, wenn als in dem Führungsrohr wirkendes Druck- oder Zugmittel ein Schraubspindelgetriebe vorgesehen wird. Dieses übt selbst bei einer äußeren ausschließlichen Linearbelastung ein Drehmoment auf den Steg aus, der somit auf eine der beiden Flanken des Längsschlitzes zu gedrückt wird. Wenn der Steg dadurch die betreffende Flanke berührt und eine Linearbewegung ausführt, ist es möglich, daß dadurch die Flanke des Längsschlitzes beschädigt wird.

Aus der DE-OS 3429783 ist ein druckmittelbetätigter Linearantriebszylinder bekannt, der ein beidseitig abgeschlossenes Führungsrohr mit einem Längsschlitz aufweist, in dem ein flexibles Abdichtband ortsfest gehalten ist. In dem Führungsrohr ist ein Kolben gleitend und abgedichtet gelagert, der mit einem Steg den Längsschlitz durchgreift. An seiner Außenseite ist der Linearantriebszylinder mit einem als Führungsplatte bezeichneten Schlitten versehen, der an eigens vorgesehenen Schienen in der Längsrichtung des Linearantriebszylinders geführt ist. Der den Längsschlitz durchgreifende Steg ist mit dem Schlitten fest verbunden.

Um seitlich auf den Abtrieb des Linearantriebszylinders einwirkende Kräfte von dem Steg fernhalten zu können, ist der außen an dem Linearantriebszylinder verschiebbar gelagerte Schlitten vorgesehen worden, was bei der Herstellung einen zusätzlichen Aufwand bedeutet.

Aus der EP-A-0345506 ist ein pneumatischer Linearantriebszylinder bekannt, der ein längsgeschlitztes Führungsrohr aufweist das beidenends verschlossen ist. In dem Führungsrohr ist ein Kolben abgedichtet und längsverschiebbar gelagert. Mit dem Kolben ist ein Steg verbunden, der den Längsschlitz des Führungsrohrs durchgreift und als Abtrieb dient. Der Steg ist mit einem Schlitten verbunden, der an dem Führungsrohr gelagert ist. Zur fluiddichten Abdichtung der beidseits des Kolbens definierten Arbeitsräume ist ein Abdichtband vorgesehen, das von innen her an den Längsschlitz anliegt. Zur Abschirmung von Staub und Schmutz und um zu verhindern, dass dieser in den Linearantrieb gelangt, dient ein außen an dem Längsschlitz vorgesehenes Abdeckband. Beide Bänder sind mit entsprechenden Längslippen an dem Führungsrohr gehalten. Die Längslippen greifen in entsprechende Längsnuten die beidseits des Längsschlitzes angeordnet sind.

Zur Verminderung der Reibung zwischen dem Steg und den Flanken des Längsschlitzes können an dem Steg Gleitelemente angeordnet sein.

Außerdem ist aus der EP-A-0104364 ein Seilzugzylinder mit einem längsgeschlitzten Führungsrohr bekannt. Das Führungsrohr umschließt einen Innenraum, in dem ein gleitend verschiebbares Element auf einem in dem Führungsrohr ortsfest angeordneten zylindrischen Rohr angeordnet ist. Das verschiebbare Element ist mit einem Steg versehen, der einen an dem Führungsrohr ausgebildeten Längsschlitz durchgreift. An den Flanken des Längsschlitzes sind gleitvermindernte Elemente angeordnet, die den Steg lagern.

Der Seilzugzylinder benötigt eine geeignete Antriebseinrichtung zur Betätigung der Seilzüge, was insgesamt einem entsprechenden Aufwand auslöst.

Davon ausgehend ist es eine Aufgabe der Erfindung, einen Linearantrieb vorzusehen, der relativ unempfindlich gegen an dem Abtrieb angreifende, außerhalb der eigentlichen Bewegungsrichtung liegende Kräfte ist und der kostengünstig herstellbar ist.

Die vorstehend genannte Aufgabe wird durch einen Linearantrieb mit den Merkmalen des Patentanspruches 1 oder 2 gelöst.

Der Linearantrieb ist weitgehend unempfindlich gegen an dem Steg angreifende seitliche Belastungen. Die an den Flanken des Längsschlitzes vorgesehenen Anlaufelemente bieten dem Steg eine gewisse seitliche Führung und schützen zugleich die Flanken des Längsschlitzes. Dadurch kann der Steg direkt als Abtrieb verwendet werden, ohne daß ein zusätzlicher äußerer, an dem Führungsrohr geführter Schlitten erforderlich wäre. Bei einer auf den Steg einwirkenden Seitenbelastung gleitet dieser an dem Anlaufelement, das bei einer entsprechenden Materialauswahl bestenfalls einem geringen Verschluß unterliegt. Außerdem ist es möglich, den Linearantrieb in Verbindung mit einem außen an dem Linearantrieb gleitend gelagerten Schlitten zu verwenden, wobei der Steg dann mit dem Schlitten lediglich in axialer Richtung fixiert ist, in seitlicher Richtung jedoch ein gewisses Spiel aufweist. Das vermeidet eine statische Überbestimmung zwischen den in dem Führungsrohr im wesentlichen spielfrei gelagerten Kolben und dem außen an dem Führungsrohr im wesentlichen spielfrei gelagerten Schlitten.

Wenn der Steg an dem Schlitten ein seitliches Spiel hat, sind der Schlitten und der Kolben nämlich entkoppelt, so daß auch ohne größeren Justageaufwand kein Verklemmen des Linearantriebs zu befürchten ist. Die seitliche Führung des Steges wird wenigstens, soweit es darauf ankommt, diesen von den Flanken des Längsschlitzes fernzuhalten, von den Anlaufelementen übernommen. Die Profilelemente müssen dabei lediglich mittleren Genauigkeitsanforderungen genügen, so daß die Profilelemente aus vorgefertigten endlosen Profilen abgelängt werden können.

Das sich vorzugsweise über die gesamte Länge der Flanke des Längsschlitzes erstreckende Profilelement kann an der Flanke des Längsschlitzes beispielsweise formschlüssig gehalten sein. Dies kann auf einfache Weise durch wenigstens eine in der Flanke des Längsschlitzes vorgesehene Nut erfolgen, in der das Profilelement mit einem Abschnitt sitzt. Es ist somit in radialer Richtung unverlierbar gehalten, wobei es in der Nut eingeklemmt oder beispielsweise stoffschlüssig gehalten sein kann.

Der Anlaufabschnitt kann, bezogen auf die Flanke des Längsschlitzes, ortsfest gelagert sein. Das ist beispielsweise gegeben, wenn der Anlaufabschnitt fest an der Flanke des Längsschlitzes anliegt. Der Steg findet dann an dem Profilelement eine relativ feste Anlage und gleitet an dieser entlang, ohne daß das Profilelement dabei einer wesentlichen Verformung unterliegt.

Der Anlaufabschnitt kann jedoch auch von der Flanke weg federnd vorgespannt sein. Der den Längsschlitz durchgreifende Steg wird dann von den entsprechenden Anlaufabschnitten federnd, etwa mittig, gehalten, wobei der Anlaufabschnitt erst dann ein festes Widerlager für den Steg bildet, wenn er von diesem an die Flanke des Längsschlitzes oder anderweitige ortsfeste Anschläge angedrückt worden ist.

Ein besonders sicherer Flankenschutz und eine gute Druckverteilung in dem Profilelement wird erreicht, wenn der Anlaufabschnitt die Flanke ganz abdeckt. Die sich in dem Anlaufabschnitt auch bei größerer seitlicher Belastung des Steges aufbauenden Spannungen sowie die Flächenbelastung an der dem Steg zugewandten Anlauffläche bleiben in erträglichen Grenzen, so daß mit lediglich geringem Verschleiß zu rechnen ist.

Wenn die Elastizität des Anlaufabschnittes gering ist, findet der Steg eine relativ feste Anlage und drückt sich wenig in das Profilelement ein. Das verringert eine ansonsten durch Walkarbeit an dem Profilelement auftretende Reibung bei einer Linearbewegung des Steges.

Es ist vorteilhaft, die Anlauffläche plan auszubilden. Somit wird eine Flächenberührung zwischen dem Steg und dem Profilelement erreicht. Dies gilt insbesondere, wenn die Anlauffläche im wesentlichen parallel zu der Flanke angeordnet ist.

An dem Profilelement ist zusätzlich ein Rastelement vorgesehen, mit dem ein den Längsschlitz abdichtendes Dichtungsband verrastbar ist. Das eröffnet die Möglichkeit, den Linearantrieb als druckmittelbetätigten Zylinder auszuführen, an dem das Dichtungsband in dem Längsschlitz ohne weiteren Aufwand gehalten ist.

Eine einfache Ausführung für das Rastelement wird erhalten, wenn das Profilelement eine sich über seine gesamte Länge erstreckende Längsrippe aufweist, der eine in dem Dichtungsband an einer der Flanke zugewandten Seite vorgesehene Längsausnehmung zugeordnet ist. Die Längsrippe bildet dabei das Rastmittel, wobei es prinzipiell möglich ist, sowohl die federnde Nachgiebigkeit des Dichtungsbandes als auch eine federnde Lagerung der Längsrippe zur Herbeiführung eines Rasteffektes auszunutzen. Bei der letztgenannten Variante ist die das Rastelement bildende Längsrippe in Richtung auf die Flanke zu federnd gelagert und von der Flanke weg federnd vorgespannt. Dieses kann erreicht werden, indem die Längsrippe an entsprechenden an dem Profilelement vorgesehenen Längsrippen oder Zungen befestigt ist.

Das Profilelement kann aus Kunststoff gefertigt sein, wobei insbesondere Kunststoffen mit hoher Verschleißfestigkeit der Vorzug zu geben ist.

In der Zeichnung sind Ausführungsbeispiele des Gegenstandes der Erfindung dargestellt. Es zeigen:
- Fig. 1: einen kolbenstangenlosen Linearantrieb mit einem von einem Profilelement gehaltenen Dichtungsband in Seitenansicht und in einer teilweise aufgebrochenen und schematisierten Darstellung,
- Fig. 2: den Linearzylinder nach Fig. 1 in Schnittdarstellung geschnitten entlang der Linie II-II,
- Fig. 3: den Linearantrieb nach Fig. 2 mit im Bereiche seines Längsschlitzes vorgesehenen Profilelementen in zwei unterschiedlichen Ausführungsformen, in ausschnittsweiser Darstellung und in vergrößertem Maßstab,
- Fig. 4: den Linearantrieb nach Fig. 2 mit im Bereiche seines Längsschlitzes angeordneten Profilelementen in zwei weiteren Ausführungsformen,
- Fig. 5: den Linearantrieb nach Fig. 2 mit im Bereiche seines Längsschlitzes angeordneten Profilelementen in zwei weiteren Ausführungsformen,
- Fig. 6: den Linearantrieb nach Fig. 2, bei dem der Längsschlitz in seinen Flanken zwei Nuten aufweist, in denen ein die Flanke abdeckendes Profilelement gehalten ist, in zwei Ausführungsformen und in einer ausschnittsweisen schematisierten Darstellung,
- Fig. 7: den Linearantrieb nach Fig. 2, bei dem das in einer Nut sitzende Profilelement eine federnde Zunge zur Halterung des Dichtungsbandes aufweist, in zwei Ausführungsformen und in ausschnittsweiser schematisierter Darstellung,
- Fig. 8: den Linearantrieb nach Fig. 2, bei dem das in einer Nut sitzende Profilelement eine federnde Zunge zur Halterung des Dichtungsbandes aufweist, in zwei Ausführungsformen und in ausschnittsweiser schematisierter Darstellung,
- Fig. 9: den Linearantrieb nach Fig. 2, bei dem das Profilelement in zwei parallel zueinander verlaufenden Nuten gehalten ist, und
- Fig. 10: den Linearantrieb nach Fig. 2, bei dem das in zwei zueinander parallelen Nuten sitzende Profilelement die Flanke des Längsschlitzes ganz abdeckt, in zwei Ausführungsformen, wobei bei einer Ausführungsform eine zusätzliche, als Labyrinthdichtung ausgeführte Abdichtung vorgesehen ist.

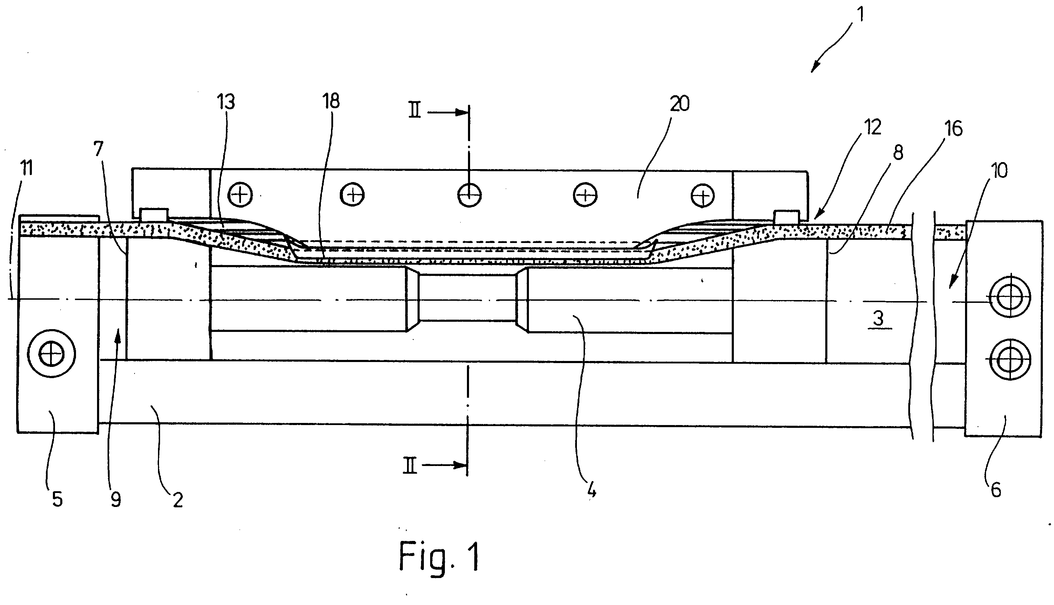

Der in Fig. 1 dargestellte Linearantriebsmodul ist ein kolbenstangenloser Linearantrieb 1, der ein Führungsrohr 2 aufweist, in dem ein gegen seine Wandung 3 abgedichteter Kolben 4 gleitend verschiebbar gelagert ist. Das Führungsrohr 2 ist jeweils endseitig mit Deckeln 5, 6 verschlossen, so daß der Kolben 4 mit seinen Stirnflächen 7, 8, der Wandung 3 und den Deckeln 5 zwei Kammern 9, 10 begrenzt, die mit Druckmittel, wie beispielsweise Preßluft beaufschlagbar sind.

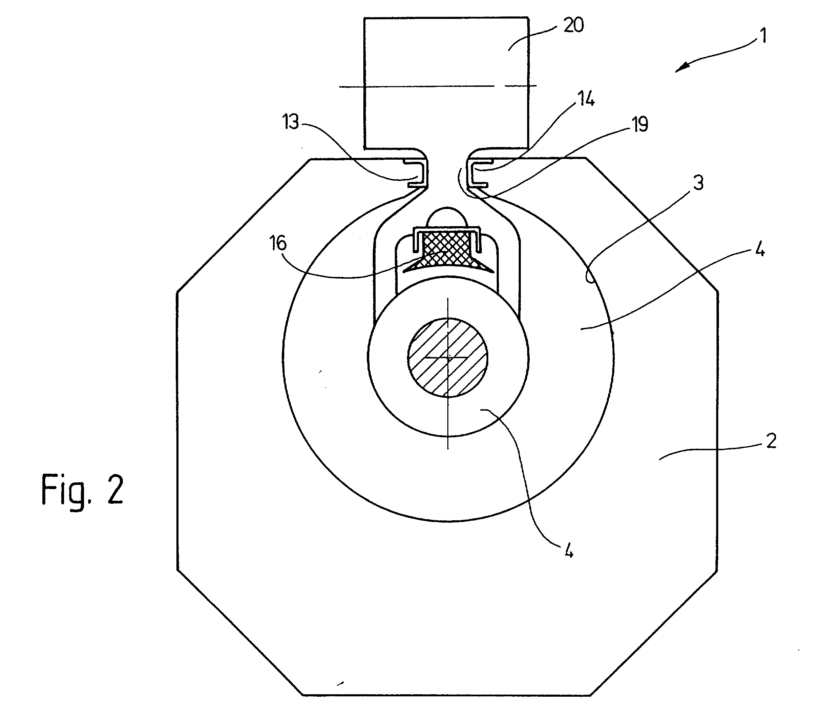

Das Führungsrohr 2 ist mit einem sich parallel zu seiner Längsachse 11 erstreckenden, die Wandung 3 durchsetzenden Längsschlitz 12 versehen, der durch zwei sich einander gegenüberliegende im Abstand parallel zueinander verlaufende Flanken 13, 14 begrenzt ist, die insbesondere aus der Fig. 2 und den folgenden Fig. ersichtlich sind.

Der Längsschlitz 12 ist durch endseitig bei den Deckeln 5, 6 gehaltenes Dichtungsband 16 verschlossen, das mittels einer an der Wandung 3 des Führungsrohrs 2 anliegenden Dichtlippe 17 die Kammern 9, 10 bei dem Längsschlitz 12 abdichtet. Dabei stimmt die Wölbung der Dichtlippe 17 nach innen hin mit der Wölbung der Wandung 3 überein, so daß der Kolben 4 an der Dichtlippe 17 wie an der übrigen Wandung 3 abgedichtet sitzt. In einem mittleren Bereich des Kolbens 4 ist das Dichtungsband 16 von einer Führungseinrichtung 18 aus dem Längsschlitz 12 nach innen gezogen. Wie aus Fig. 2 ersichtlich ist, ist in diesem Bereich ein gegabelter Steg 19 vorgesehen, der den Kolben 4 mit einem außeren Abtrieb 20 verbindet und durch dessen Gabel das Dichtungsband 16 durchgeführt ist.

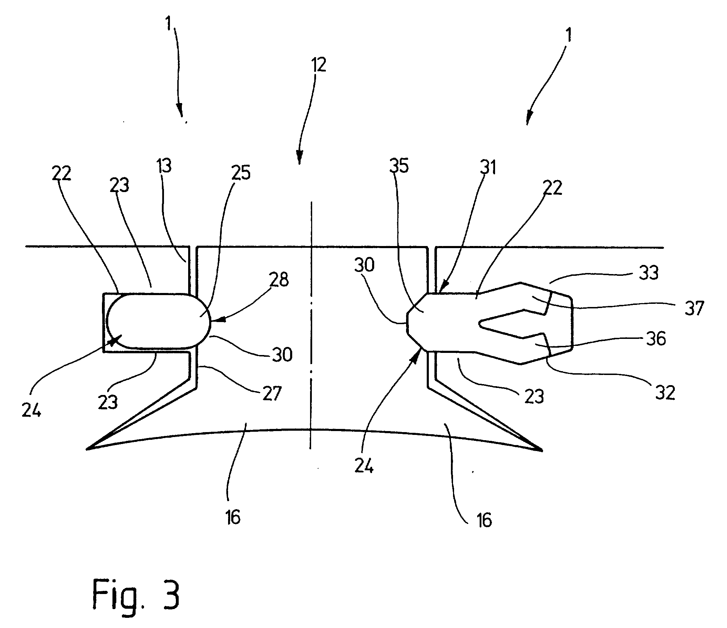

In Fig. 3 sind zwei mögliche und hinsichtlich der Ausbildung des Längsschlitzes 12 und des Dichtungsbandes 16 unterschiedliche Ausführungsformen des Linearantriebs 1 im Ausschnitt dargestellt. Dabei ist sowohl in der Fig. 3, wie auch in den übrigen, nachfolgenden Figuren jeweils in der linken Hälfte der Fig. eine Ausführungsform und in der rechten Hälfte der Fig. eine weitere Ausführungsform dargestellt. Allen Ausführungsformen ist gemeinsam, daß in jeder Flanke 13, 14 eine Nut 22 vorgesehen ist, in der ein Profilelement 24 gehalten ist. Bei allen Ausführungsformen stimmt der Querschnitt der in der Flanke 13 vorgesehenen Nut 22 mit dem Querschnitt der in der gegenüberliegenden Flanke 14 vorgesehenen Nut 22 überein.

Um eine übersichtliche Bezugnahme zu ermöglichen, sind funktionsgleiche Teile und Abschnitte an unterschiedlichen Ausführungsformen des Linearantriebs 1 mit gleichen Bezugszeichen versehen.

Bei der in Fig. 3 links dargestellten Ausführungsform des Linearantriebs 1 ist die in der Flanke 13 vorgesehene Nut 22 rechteckig ausgebildet. Sie weist zwei zueinander parallele Seitenwände 23 auf, zwischen denen das im Querschnitt ovale Profilelement 24 gehalten ist. Das Profilelement 24 ist aus einem flexiblen Moosgummi hergestellt und weist einen in den Längsschlitz 12 ragenden Rastabschnitt 25 auf, der im Querschnitt im wesentlichen kreisabschnittsförmig ist.

Das mit einem im wesentlichen rechteckigen Abschnitt 26 in dem Langsschlitz 12 liegende Dichtungsband 16 weist an seiner bei der Flanke 13 liegenden Seite 27 eine Längsausnehmung 28 auf, die in ihrem Querschnitt mit dem Querschnitt des Abschnitts 26 übereinstimmt und somit ebenfalls kreisabschnittsförmig ist.

Bei dem insoweit beschriebenen Linearantrieb 1 ist durch das in der Längsausnehmung 28 liegende Profilelement 24 eine Rastverbindung zwischen dem Dichtungsband 16 und dem Führungsrohr ausgebildet. Das außerhalb des von dem Kolben 4 eingenommenen Bereiches liegende Dichtungsband 16 ist somit so weit in dem Längsschlitz 12 gehalten, daß die Dichtlippe 17 an der Wandung 3 anliegt und die Kammern 9, 10 somit dicht sind.

Darüberhinaus erbringt das Profilelement 24 einen gewissen Seitenanlaufschutz. Der Rastabschnitt 25 wirkt damit zugleich als Anlaufabschnitt 30, der den Steg daran hindet, an der Flanke 13 entlangzugleiten und diese zu beschädigen. Die Schutzwirkung ist jedoch zumindest bei einem durchgehend flach ausgebildeten Steg eher gering und von der Federwirkung des Profilelements 24 abhängig. Zur Verstärkung des Seitenanlaufschutzes kann der Steg 19 mit einem auf gleicher Höhe wie das Profilelement 24 liegenden Vorsprung versehen sein, der sich an dem Rastabschnitt 25 des Profilelementes 24 abstützt.

Bei dem in Fig. 3 auf der rechten Bildhälfte dargestellten Ausschnitt des Linearantriebs 1 ist die Nut 22 in der Nähe ihrer Mündung 31 parallelflankig ausgebildet, wobei sie sich im Anschluß an den parallelflankigen Abschnitt von der Mündung 31 weg zunächst erweitert und dann wieder verengt. Somit bilden Abschnitte der Seitenwände 23 einander gegenüberliegende Anlageflächen 32, 33, die einen spitzen, sich zu der Mündung 31 hin öffnenden Winkel miteinander einschließen.

In diese Nut 22 ist das Profilelement 24 eingesetzt, dessen Rastabschnitt 25 hier trapezförmig ist. An dem in der Nut 22 sitzenden Abschnitt dieses Profilelements 24 sind zwei miteinander einen spitzen Winkel einschließende Schenkel 36, 37 vorgesehen, die federnd ausgebildet sind und an den entsprechenden Anlageflächen 32, 33 der Nut 22 anliegen.

Das Profilelement 24 ist aus einem federnden Kunststoff hergestellt, so daß die Schenkel 36, 37 beim Einschieben des Profilelements 24 in die Nut 22 zusammenfedern,und das Profilelement 24 auf seine in Fig. 3 dargestellte Ruhelage zu federnd vorspannen.

Entsprechend der Querschnittsgestalt des Rastabschnitts 25 ist die in dem Dichtungsband 16 vorgesehene Längsausnehmung 28 bei dieser Ausführungsform des Profilelements in Übereinstimmung mit dem trapezförmigen Rastabschnitt 25 ebenfalls trapezförmig.

Bei dieser insoweit beschriebenen Ausführungsform wird die Rastwirkung zwischen dem Führungsrohr 2 und dem Dichtungsband 16 ebenfalls durch die Wirkung des Profilelements 24 sichergestellt. Im Unterschied zu dem vorstehend beschriebenen Ausführungsbeispiel wird das als Rastglied dienende Profilelement 24 während des Rastvorgangs jedoch nicht im ganzen, sondern im wesentlichen lediglich bei seinen Schenkeln 36, 37 deformiert. Das Ausmaß der Deformation ist darüberhinaus geringer, so daß ein Kunststoff mit geringerer Nachgiebigkeit verwendet werden kann. Außerdem bietet auch dieses Profilelement 24 einen Seitenanlaufschutz. Dies ist insbesondere der Fall, wenn der Steg mit einer seitlichen, sich an dem Profilelement 24 abstützenden Längsrippe versehen ist. Spätestens nämlich, wenn das Profilelement 24 ganz in die Nut 22 eingedrückt ist, so daß die Schenkel 36, 37 an deren Boden anliegen, ist das Profilelement 24 ein festes Widerlager für den Steg 19.

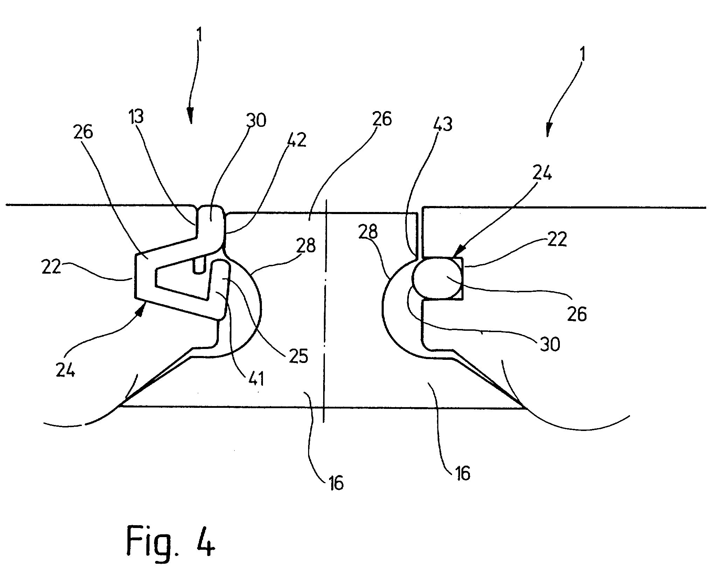

Bei dem in Fig. 4 links dargestellten Linearantrieb 1 weist das in einer hier trapezförmigen Nut 22 sitzende Profilelement 24 einen von dem Rastabschnitt 25 getrennten Anlaufabschnitt 30 auf. Der Rastabschnitt 25 ist dabei eine an dem Profilelement 24 ausgebildete federnde Zunge oder Lippe 41, die in Richtung auf das Dichtungsband 16 zu mit leichter Neigung gegen die Flanke 13 vorsteht. Im Zusammenwirken mit der Längsausnehmung 28, die bei dieser Ausführungsform relativ tief ist, ist somit eine Rastverbindung ausgebildet, wobei aufgrund der geringen Neigung der Lippe 41 gegen die Flanke 13 das Dichtungsband 16 mit geringer Kraft in den Längsschlitz 12 einführbar ist. Sobald die Lippe 41 in der Längsausnehmung 28 liegt, ist das Dichtungsband 16 in dem Längsschlitz 12 fest eingerastet, so daß zur Herausführung des Dichtungsbandes 16 aus dem Längsschlitz 12 eine größere Kraft erforderlich ist.

Der separate Anlaufabschnitt 30 liegt an einem etwas zurückversetzten Bereich der Flanke 13 an und steht in den Längsschlitz 12 vor. Er ist dabei so bemessen, daß er an dem Abschnitt 26 des Dichtungsbandes 16 anliegt.

Bei dieser Ausführungsform wird mit dem Profilelement 24 ein besonders guter Anlaufschutz sichergestellt. Der Steg 19 legt sich, wenn er mit einer seitlichen Kraft beaufschlagt wird, an dem Anlaufabschnitt 30 oder genauer an seiner Anlauffläche 42 an, die im wesentlichen parallel zu der Flanke 13 angeordnet ist. Weil die Anlauffläche 42, bezogen auf die Flanke 13, vorsteht,und das Profilelement 24 insgesamt, insbesondere aber bei dem Anlaufabschnitt 30 aus relativ steifem Material besteht, kann der an der Anlauffläche 42 anliegende Steg 19 die Flanke 13 nicht berühren. Diese ist somit wirksam gegen Beschädigungen geschützt.

Das Dichtungsband 16 ist an seiner dem Kolben 4 zugewandten Innenseite gerade, d.h. plan ausgebildet. Deshalb wird es von dem unter dem Dichtungsband 16 durchlaufenden Kolben geringfügig verformt, d.h. nach außen gedrückt. Die Innenseite des Dichtungsbandes 16 nimmt dabei die Krümmung des Kolbens 4 an. Um eine entsprechende Bewegungsfreiheit sicherzustellen, ist die Längsausnehmung 28 relativ groß bemessen.

Das in Fig. 4 rechts dargestellte Ausführungsbeispiel des Linearantriebs 1 entspricht weitgehend dem in Fig. 3 links dargestellten. Der Unterschied liegt darin, daß das Profilelement 24 einen im wesentlichen runden Querschnitt und die Nut 22 einen quadratischen Querschnitt aufweisen. Darüber hinaus ist die Ausnehmung 28 wesentlich größer, so daß das Dichtungsband 16 im Ruhezustand lediglich mit einer Kante 43 an dem Profilelement 24 anliegt. Das Dichtungsband 16 ist auch hier, wie bei dem vorstehend beschriebenen Ausführungsbeispiel, an seiner Innenseite eben, so daß es von dem durchlaufenden Kolben 4 etwas nach außen gedrückt wird. Die Längsausnehmung 28 gewährt dabei eine entsprechende Bewegungsfreiheit des Dichtungsbandes 16.

Ein, wenn auch eher gering ausgeprägter Seitenanlaufschutz, ist auch bei diesem Ausführungsbeispiel sichergestellt, wenn an dem Steg 19 eine mit dem Profilelement 24 zusammenwirkende, d.h. an diesem anliegende Rippe vorgesehen ist.

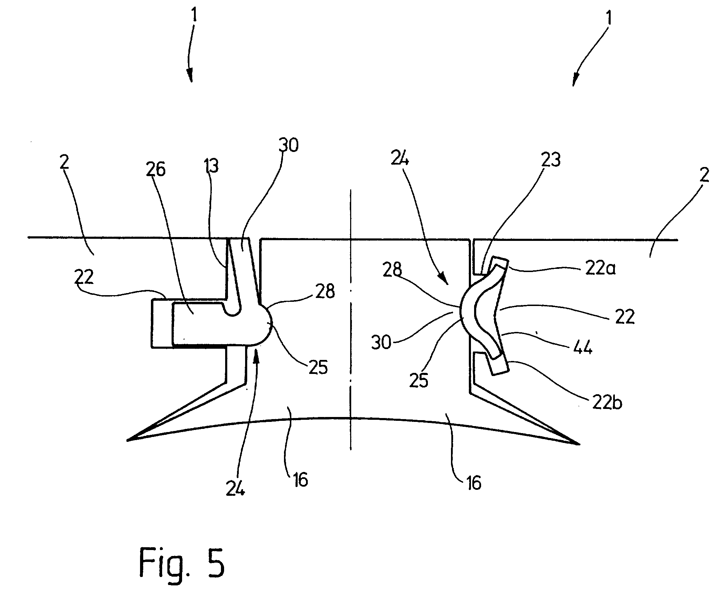

Bei dem in Fig. 5 links dargestellten Linearantrieb 1 ist ein Profilelement 24 verwendet, das sowohl eine gute Rastwirkung wie auch einen guten Anlaufschutz sicherstellt. Der in der Nut 22 liegende Abschnitt 26 ist in Richtung der Flächennormalen der Flanke 13 verschiebbar gelagert. Der Rastabschnitt 25 ist kreisabschnittförmig und liegt in der entsprechend geformten Längsausnehmung 28. Von dem Rastabschnitt 25 aus erstreckt sich der federnd ausgebildete Anlaufabschnitt 30 von der Nut 22 über den an die Nut 22 angrenzenden Abschnitt der Flanke 13 und deckt diesen ab. Der in Ruhestellung schräg von dem Abschnitt 26 wegstehende Anlaufabschnitt 30 stützt sich an der Flanke 13 ab und drückt den Rastabschnitt 25 in Richtung auf das Dichtungsband 16 zu, so daß der Rastabschnitt 25 fest in der Längsausnehmung 28 liegt.

Das Ein- und Ausrasten des Dichtungsbandes 16 erfolgt in ähnlicher Weise wie bei den vorstehend beschriebenen Ausführungsbeispielen. Außerdem ist durch den Anlaufabschnitt 30 ein Schutz der Flanke 13 gegen Beschädigung durch den Steg 19 sichergestellt, wenn dieser auf die Flanke 13 zu gedrückt wird. Dies ist insbesondere der Fall, wenn das Profilelement aus einem zähen und verschleißfesten Kunststoff hergestellt ist.

Bei dem in Fig. 5 rechts dargestellten Ausführungsbeispiel ist die Nut 22 mit Hinterschneidungen versehen. Im einzelnen weist die Nut 22 zwei in relativ großem Abstand parallel zueinander verlaufende Seitenwände auf, in die nochmals einander gegenüberliegende Nuten 22a, 22b mit jeweils rechteckigem Querschnitt eingebracht sind. Die Nuten 22a, 22b bilden mit ihren Seitenflächen einen dachartigen Boden 44 der Nut 22. Der Boden 44 weist dabei zwei Abschnitte auf, die in einem sich von der Nut 22 weg öffnenden stumpfen Winkel zueinander stehen. An diesen Abschnitten des Bodens 44 stützt sich das Profilelement 24 ab, das im Ruhezustand ein U-förmiger Streifen ist. Dieser liegt mit seinen Schenkeln in den Nuten 22a, 22b, wodurch er aufgespreizt ist. Das Profilelement 24 besteht aus einem flexiblen Material, wie beispielsweise Kunststoff oder auch einem federnden Blechstreifen. Durch seine Federwirkung wird das Profilelement 24 etwas aus der Mündung 31 der Nut 22 herausgedrückt, so daß es mit seinem Rastabschnitt 25 aus dieser hervorsteht.

Auch bei dieser Ausführungsform wird ein Rasteffekt zwischen dem Dichtungsband 16 und dem Führungsrohr 2 sowie ein Anlaufschutz wie bei den vorstehend beschriebenen Ausführungsbeispielen erreicht.

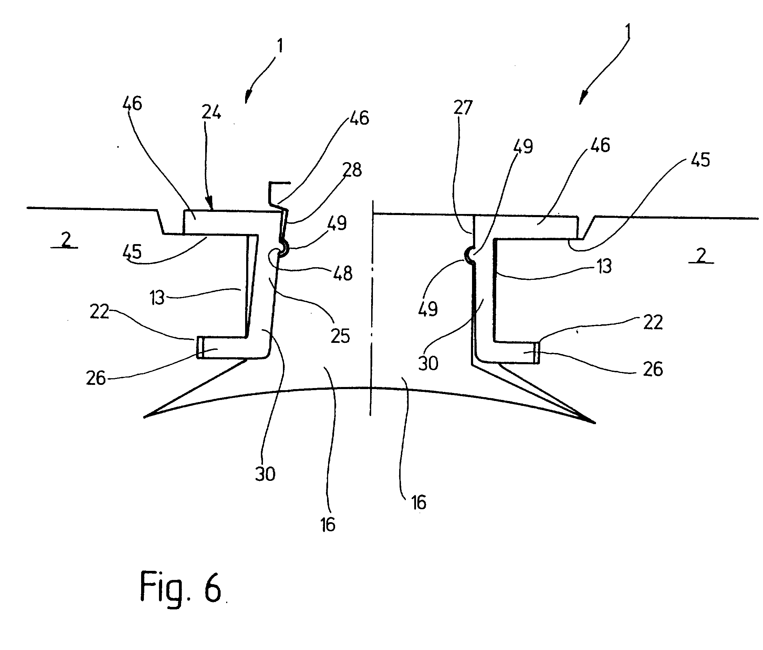

In der Fig. 6 sind weitere Ausführungsbeispiele dargestellt, wobei bei der links dargestellten Ausführungsform zusätzlich zu der Nut 22 eine zweite randoffene Nut 45 vorgesehen ist, die an der der Nut 22 gegenüberliegenden Seite der Flanke 13 angeordnet ist. Das Profilelement 24 weist zwei in den Nuten 22, 45 liegende Abschnitte 26, 46 auf, die durch den Anlaufabschnitt 30 miteinander elastisch verbunden sind. Der Anlaufabschnitt 30 verdeckt dabei die gesamte Flanke 13. Im Ruhezustand schließen der Abschnitt 26 mit dem Anlaufabschnitt 30 einen stumpfen und der in der randoffenen Nut 45 liegende Abschnitt 46 mit dem Anlaufabschnitt 30 miteinander einen spitzen Winkel ein. Dadurch steht der Anlaufabschnitt 30 bei der randoffenen Nut 45 in Richtung auf das Dichtungsband 16 elastisch vor, wobei er zugleich den Rastabschnitt 25 bildet.

Die Seite 27 des Dichtungsbandes 16 ist gegen die Flanke 13 geneigt und geht oberhalb des Anlaufabschnittes 30 mit einer Stufe 47 zu einer größeren Breite über. Die geneigte Seite 27 und die Stufe 47 begrenzen gemeinsam die Längsausnehmung 28,in der der Anlaufabschnitt 30 liegt.

Wegen der kompletten Abdeckung der Flanke 13 durch den Anlaufabschnitt 30 wird bei dieser Ausführungsform ein besonders guter Anlauf schutz erreicht.

Zusätzlich kann, beispielsweise um die Abdichtung des Dichtungsbandes zu verbessern, auf der Anlauffläche 42 des Anlaufabschnittes eine längs verlaufende, im Querschnitt halbrunde Rippe 48 vorgesehen sein, die in einer entsprechenden, in der Seite 27 des Dichtungsbandes 16 vorgesehenen Längsrille 49 liegt.

Die in Fig. 6 rechts dargestellte Ausführungsform stimmt weitgehend mit der links dargestellten überein, wobei die Seite 27 des Dichtungsbandes 16 jedoch parallel zu der Flanke 13 des Längs'schlitzes 12 verläuft. Nach außen hin schließt das Dichtungsband 16 glatt mit dem Führungsrohr 2 und dem in der randoffenen Nut 45 liegenden Abschnitt 46 des Profilelements 24 ab. Die Rastwirkung wird hier im wesentlichen durch das Zusammenwirken der Rippe 48 mit der Längsrille 49 hervorgerufen.

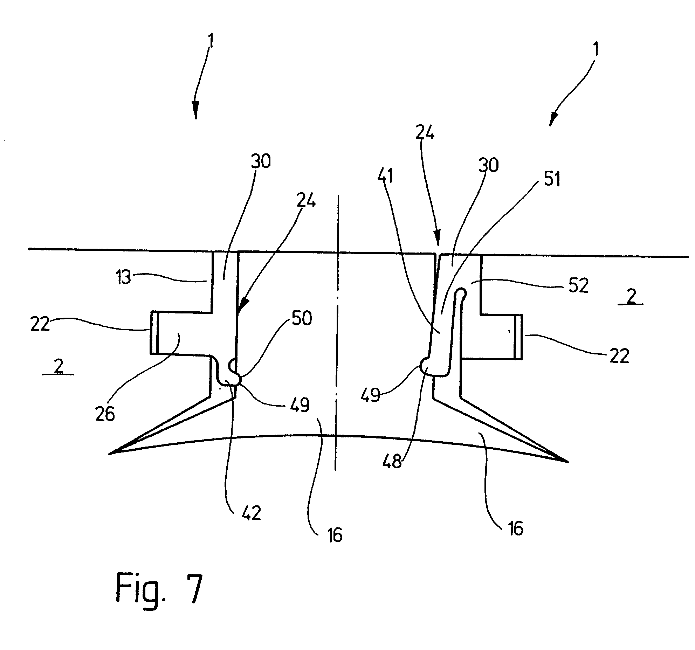

Der in Fig. 7 links dargestellte Linearantrieb 1 ist mit dem in Fig. 5 links dargestellten weitgehend baugleich, wobei der Anlaufabschnitt 30 flach an der Flanke 13 anliegt. Das ansonsten im Querschnitt ein Winkelprofil definierende Profilelement 24 ist in der rechteckigen Nut 22 formschlüssig gehalten und bezüglich des Führungsrohres 2 im wesentlichen ortsfest. Die Rastwirkung wird durch die hier sehr kurz ausgebildete Rastlippe 42 hervorgerufen, die mit einer Rastnase 50 in der in dem Dichtungsband 16 vorgesehenen Längsrille 49 liegt.

Wegen der nahezu vollständigen Abdeckung der Flanke 13 durch das Profilelement 24 wird ein guter Anlauf schutz erreicht, wobei die erzielbare Rastwirkung durch eine entsprechende Auslegung der Lippe 41 variierbar ist.

Bei dem in Fig. 7 rechts dargestellten Linearantrieb 1 ist an dem in der rechteckigen Nut 22 liegenden Profilelement 24 eine Biegefeder 51 ausgebildet, deren erster Schenkel 52 an der etwas zurückversetzten Flanke 13 satt anliegt und deren anderer Schenkel durch die Lippe 41 gebildet ist, die mit dem Schenkel 52 an der Außenseite des Linearantriebes 1 durchgehend verbunden ist.

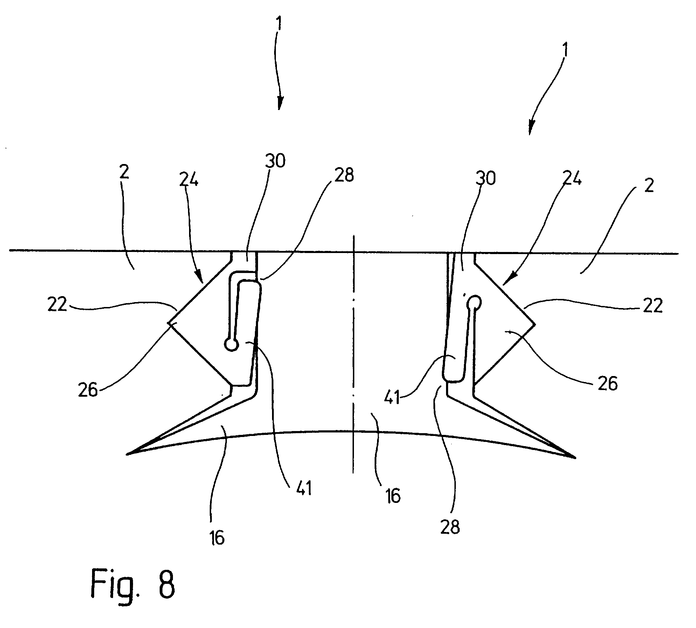

Weitere, sowohl einen Anlauf schutz als auch eine Rastfunktion sicherstellende Ausführungsformen des Linearantriebs 1 sind in Fig. 8 dargestellt. Das Profilelement 24 liegt in der hier im Querschnitt dreieckig ausgebildeten Nut 22 in der der ebenfalls dreieckige Abschnitt 26 sitzt. Dieser kann sowohl, wie dargestellt, voll ausgebildet, als auch mit einer Längsnut versehen sein, die die Elastizität des Abschnittes 26 erhöht. Der Anlaufabschnitt 30 und die Lippe 41 sind hier an einander gegenüberliegenden Seiten des Abschnittes 26 angeordnet.

Jedoch kann die Lippe 41 auch, wie es in Fig. 8 rechts dargestellt ist, direkt mit dem Anlaufabschnitt 30 elastisch verbunden sein.

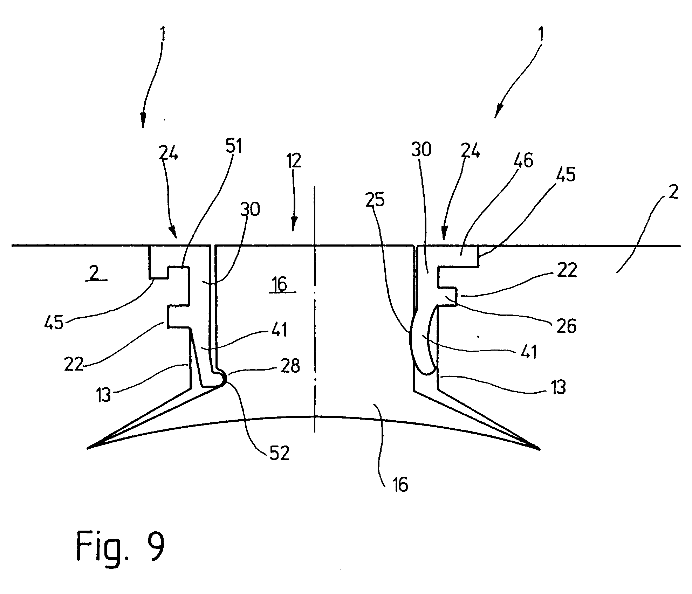

Eine weitere Ausführungsform ist in der linken Hälfte der Fig. 9 dargestellt. Hier ist die randoffene Nut 45 an ihrer an die Flanke 13 grenzenden Seite mit einem längs verlaufenden Vorsprung 53 versehen, so daß sich, von dem Längsschlitz 12 her gesehen, in der Nut 45 eine Hinterschneidung ergibt. Das Profilelement 24 liegt in beiden Nuten 22, 45 an und fluchtet sowohl mit der Außenseite des Führungsrohres 2 als auch mit der äußeren Seite des Dichtungsbandes 16. Von dem durch die Nuten 22, 45 ortsfest gehaltenen Abschnitt des Profilelements erstreckt sich die Lippe oder Zunge 41 in Richtung auf den Kolben 4 zu in etwa radialer Richtung. Die Lippe 41 liegt dabei nicht an der Flanke 13 an, sondern steht von dieser in dem Längsschlitz 12.

Die Lippe 41 ist endseitig mit der sich über deren gesamte Länge erstreckenden Rastnase 50 versehen, die in der hier rillenförrnigen Längsausnehmung 28 liegt, wodurch das Dichtungsband 16 mit dem Führungsrohr 2 verrastet ist. Der Anlaufschutz wird hier durch den sich zwischen den Nuten 22, 45 erstreckenden Anlaufabschnitt 30 sichergestellt.

Der in Fig. 9 rechts dargestellte Linearantrieb 1 stimmt mit dem links dargestellten weitgehend überein, wobei auf die Hinterschneidung in der randoffenen Nut 45 verzichtet worden ist. Außerdem ist die flexible Lippe 41 gewölbt ausgebildet, so daß sie sich mit ihrem freien Ende an der Flanke 13 abstützt. Sie ist in den Längsschlitz 12 vorgewölbt, wobei dieser vorstehende Abschnitt den hier etwa kreisabschnittförmigen Rastabschnitt 25 bildet.

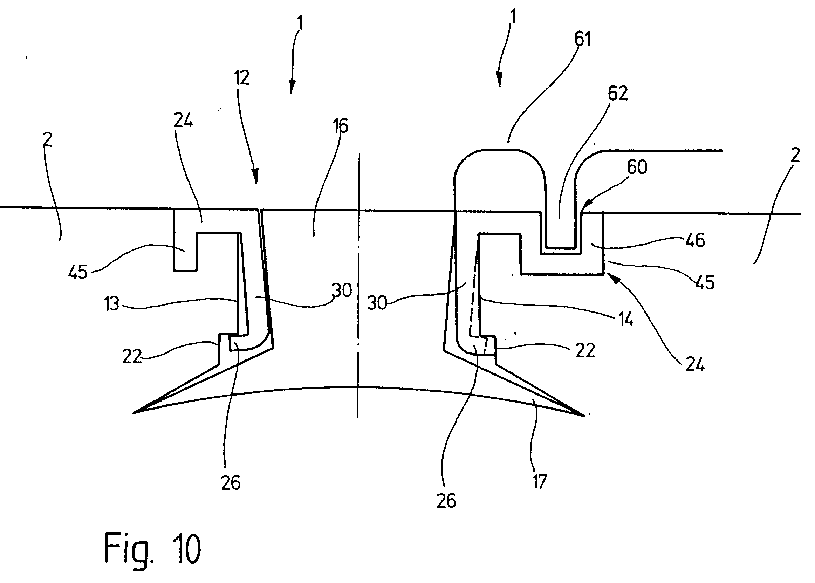

Bei den in Fig. 10 dargestellten Ausführungsbeispielen des Linearantriebs 1 ist durch eine Hinterschneidung in der randoffenen Nut 45 eine besonders sichere Befestigung des Profilelements 24 sichergestellt. Bei beiden Ausführungsbeispielen ist die Nut 22 ebenfalls als randoffene Nut ausgebildet. Von dem in der Nut 45 liegenden Abschnitt des Profilelements 24 erstreckt sich der federnd ausgebildete Anlaufabschnitt 30 in Richtung auf die randoffene Nut 22, in die er mit einem kurzen Abschnitt eingreift. Der Anlaufabschnitt 30 ist federnd von der Flanke 13 weg vorgespannt, so daß sich für den trapezförmig ausgebildeten, in dem Längsschlitz liegenden Abschnitt des Dichtungsbandes 16 eine Rastwirkung ergibt. Außerdem wird ein guter Anlaufschutz erreicht.

Bei dem in Fig. 10 rechts dargestellten Linearantrieb 1 weist das Profilelement 24 an dem in der Nut 45 liegenden Abschnitt 46 eine nach außen hin geöffnete Dichtnut 60 auf. Die Dichtnut 60 bildet mit einem an einem Abdeckband 61 oder einem Schlitten vorgesehenen Vorsprung eine Labyrinthdichtung. Damit wird eine zusätzliche verbesserte Abdichtung des Linearantriebs 1 erreicht.

Das Profilelement 24 kann in jeder seiner Ausführungsformen als Anlausschutzelement sowohl an druckmittelbetätigten Linearantrieben 1 als auch an solchen Linearantrieben verwendet werden, die über Zugmittel, Schraubspindelgetriebe oder Zahnstangen angetrieben sind.

## Patentansprüche

1. Linearantrieb (1),
mit einem Führungsrohr (2), das einen seine Wandung (3) durchsetzenden Längsschlitz (12) aufweist und in dem ein Kolben (4) in Längsrichtung verschiebbar gelagert ist, wobei der Längsschlitz (12) von zueinander parallelen, einander gegenüberliegenden Flanken (13, 14) begrenzt ist,
mit einem den Längschlitz (12) durchgreifenden Steg (19), der mit dem Kolben (4) verbunden ist und der der Kraftübertragung von dem Kolben (4) auf einen äußeren Abtrieb (20) dient,
wobei an dem Führungsrohr (2) endseitig Verschlußeinrichtungen (5, 6) sitzen, die mit dem Kolben (4) und dem Führungsrohr (2) jeweils eine Kammer (9, 10) definieren, und
wobei der Längsschlitz (12) durch ein Dichtungsband (16) verschlossen ist, das die Kammern (9, 10) bei dem Längsschlitz abdichtet,
mit an der Flanke (13, 14) des Längsschlitzes (12) vorgesehenen Profilelementen (24), die eine Gleitführung ermöglichen,
wobei die Profilelemente (24) einen wenigstens teilweise über die Flanke (13) vorstehenden als Führung für den Steg (19) dienenden Abschnitt aufweisen, so daß der Steg (19) bei einer seitlichen Belastung in Richtung auf die Flanke (13) zu an einer ein Widerlager bildende Anlauffläche (42) aus Kunststoff anliegt und an der Berührung der Flanke (13) gehindert ist
dadurch gekennzeichnet,
daß das Dichtungsband (16) einen in dem Längsschlitz (12) angeordneten Halteabschnitt (26) aufweist und
daß das Profilelement (24) zusätzlich einen Rastabschnitt (25) zum Halten des Dichtungsbands (16) aufweist.

2. Linearantrieb (1),
mit einem Führungsrohr (2), das einen seine Wandung (3) durchsetzenden Längsschlitz (12) aufweist und in dem ein Kolben (4) in Längsrichtung verschiebbar gelagert ist, wobei der Längsschlitz (12) von zueinander parallelen, einander gegenüberliegenden Flanken (13, 14) begrenzt ist,
mit endseitig an dem Führungsrohr (2) sitzenden Verschlußeinrichtungen (5, 6),
mit einem den Längschlitz (12) durchgreifenden Steg (19), der mit dem Kolben (4) verbunden ist,
wobei an der Flanke (13, 14) des Längsschlitzes (12) ein einen Anlaufabschnitt (30) aufweisendes Profilelement (24) gehalten ist, das wenigstens teilweise über die Flanke (13) vorsteht, so daß der Steg (19) bei einer seitlichen Belastung in Richtung auf die Flanke (13) zu an einer ein Widerlager bildende Anlauffläche (42) anliegt und an der Berührung der Flanke (13) gehindert ist,
dadurch gekennzeichnet,
daß der Anlaufabschnitt (30) gegen einen Anschlag federnd gelagert ist.

3. Linearantrieb nach Anspruch 1, dadurch gekennzeichnet, daß das Profilelement (24) an der Flanke (13) des Längsschlitzes (12) formschlüssig gehalten ist.

4. Linearantrieb nach Anspruch 1, dadurch gekennzeichnet, daß in der Flanke (13) des Längsschlitzes (12) wenigstens eine Nut (22) vorgesehen ist, in der das Profilelement (24) mit einem Abschnitt (26) sitzt.

5. Linearantrieb nach Anspruch 1, dadurch gekennzeichnet, daß der Anlaufabschnitt (30), bezogen auf die Flanke (13) des Längsschlitzes (12), ortsfest gelagert ist.

6. Linearantrieb nach Anspruch 1, dadurch gekennzeichnet, daß der Anlaufabschnitt (30) an der Flanke (13) anliegt.

7. Linearantrieb nach Anspruch 1, dadurch gekennzeichnet, daß der Anlaufabschnitt (30) federnd von der Flanke (13) weg vorgespannt ist.

8. Linearantrieb nach Anspruch 1, dadurch gekennzeichnet, daß der Anlaufabschnitt (30) die Flanke (13) ganz abdeckt.

9. Linearantrieb nach Anspruch 1, dadurch gekennzeichnet, daß der Anlaufabschnitt (30) eine geringe Elastizität aufweist.

10. Linearantrieb nach Anspruch 1, dadurch gekennzeichnet, daß die Anlauffläche (42) plan ausgebildet ist.

11. Linearantrieb nach Anspruch 1, dadurch gekennzeichnet, daß die Anlauffläche (42) im wesentlichen parallel zu der Flanke (13) angeordnet ist.

12. Linearantrieb nach Anspruch 1, dadurch gekennzeichnet, daß das Profilelement (24) eine sich über die Länge des Profilelementes (24) erstreckende Längsrippe (48) aufweist, der eine in dem Dichtungsband (16) an einer der Flanke (13) zugewandten Seite (27) vorgesehene Längsausnehmung (28) zugeordnet ist.

13. Linearantrieb nach Anspruch 1, dadurch gekennzeichnet, daß der Rastabschnitt (25) in Richtung auf die Flanke (13) zu federnd gelagert und von der Flanke (13) weg federnd vorgespannt ist.

14. Linearantrieb nach Anspruch 1, dadurch gekennzeichnet, daß das Profilelement (24) aus Kunststoff ist.

15. Linearantrieb nach Anspruch 1, dadurch gekennzeichnet, daß das Profilelement (24) an der Flanke (13) stoffschlüssig gehalten ist.

## Claims

1. Linear drive (1),
with a guide tube (2) which has a longitudinal slot (12) passing through its wall (3) and in which a piston (4) is mounted so as to be movable in the longitudinal direction, the longitudinal slot (12) being delimited by flanks (13, 14) which lie opposite one another and parallel to one another,
with a stem (19) which passes through the longitudinal slot (12), is connected to the piston (4) and serves for transmission of force from the piston (4) to an external power take-off (20),
wherein closure arrangements (5, 6) sit on the ends of the guide tube (2) and in each case define a chamber (9, 10) with the piston (4) and the guide tube (2),
the longitudinal slot (12) being closed by a sealing strip (16) which seals off the chambers (9, 10) at the longitudinal slot,
with profile elements (24) which facilitate sliding guiding provided on the flank (13, 14) of the longitudinal slot (12),
wherein the profile elements (24) have a portion which projects at least partially over the flank (13) and serves as a guide for the stem (19), so that in the event of lateral loading in the direction of the flank (13) the stem (19) rests on a contact surface (42) made from plastics material and forming an abutment and is prevented from touching the flank (13),
characterised in that the sealing strip (16) has a retaining portion (26) disposed in the longitudinal slot (12),
and that the profile element (24) has in addition a latching portion (25) for retaining the sealing strip (16).

2. Linear drive (1),
with a guide tube (2) which has a longitudinal slot (12) passing through its wall (3) and in which a piston (4) is mounted so as to be movable in the longitudinal direction, the longitudinal slot (12) being delimited by flanks (13, 14) which lie opposite one another and parallel to one another,
with closure arrangements (5, 6) which sit on the ends of the guide tube (2),
with a stem (19) which passes through the longitudinal slot (12) and is connected to the piston (4),
wherein a profile element (24) which has a contact portion (30) is retained on the flank (13, 14) of the longitudinal slot (12) and projects at least partially over the flank (13), so that in the event of lateral loading in the direction of the flank (13) the stem (19) rests on a contact surface (42) made from plastics material and forming an abutment and is prevented from touching the flank (13),
characterised in that the contact portion (30) is resiliently mounted against a stop.

3. Linear drive as claimed in Claim 1, characterised in that the profile element (24) is retained in a form-locking manner on the flank (13) of the longitudinal slot (12).

4. Linear drive as claimed in Claim 1, characterised in that at least one groove (22) in which the profile element (24) sits with a portion (26) is provided in the flank (13) of the longitudinal slot (12).

5. Linear drive as claimed in Claim 1, characterised in that the contact portion (30) is mounted stationary relative to the flank (13) of the longitudinal slot (12).

6. Linear drive as claimed in Claim 1, characterised in that the contact portion (30) rests on the flank (13).

7. Linear drive as claimed in Claim 1, characterised in that the contact portion (30) is pretensioned resiliently away from the flank (13).

8. Linear drive as claimed in Claim 1, characterised in that the contact portion (30) entirely covers the flank (13).

9. Linear drive as claimed in Claim 1, characterised in that the contact portion (30) has a slight resiliency.

10. Linear drive as claimed in Claim 1, characterised in that the contact portion is of planar construction.

11. Linear drive as claimed in Claim 1, characterised in that the contact portion (42) is disposed substantially parallel to the flank (13).

12. Linear drive as claimed in Claim 1, characterised in that the profile element (24) has a longitudinal rib (48) which extends over the length of the profile element (24) and with which is co-ordinated a longitudinal recess (28) which is provided in the sealing strip (16) on a side (27) facing the flank (13).

13. Linear drive as claimed in Claim 1, characterised in that the latching portion (25) is mounted resiliently in the direction of the flank (13) and pretensioned resiliently away from the flank (13).

14. Linear drive as claimed in Claim 1, characterised in that the profile element (24) is made from plastics material.

15. Linear drive as claimed in Claim 1, characterised in that the profile element (24) is held by self-substance retention on the flank (13).

## Revendications

1. Entraînement linéaire (1),
avec un tube de guidage (2) qui est pourvu d'une fente longitudinale (12) traversant sa paroi (3) et dans lequel un piston (4) est monté coulissant dans la direction longitudinale, la fente longitudinale (12) étant délimitée par des flancs (13, 14) mutuellement parallèles, en vis-à-vis,
avec une barrette (19) qui traverse la fente longitudinale (12), est reliée au piston (4) et sert à la transmission des forces du piston (4) à un élément de prise de force (20) extérieur,
des dispositifs de fermeture (5, 6) étant montés côté extrémité sur le tube de guidage (2), lesquels dispositifs de fermeture, avec le piston (4) et le tube de guidage (2), définissent chacun une chambre (9, 10),
la fente longitudinale (12) étant fermée par un ruban d'étanchéité (16) qui ferme de manière étanche les chambres (9, 10) au niveau de la fente longitudinale,
avec, prévus sur les flancs (13, 14) de la fente longitudinale (12), des éléments profilés (24) qui assurent un guidage coulissant,
les éléments profilés (24) comprenant une partie qui fait au moins partiellement saillie par rapport au flanc (13) et sert de guidage pour la barrette (19), de telle sorte que la barrette (19), en présence d'une sollicitation latérale dirigée vers le flanc (13), vienne en appui contre une surface de contact (42) en matière plastique formant contre-appui et ne puisse pas venir en contact avec le flanc (13),
caractérisé
par le fait que le ruban d'étanchéité (16) comporte une partie de retenue (26) disposée dans la fente longitudinale (12) et
par le fait que l'élément profilé (24) comporte une partie d'encliquetage (25) pour tenir le ruban d'étanchéité (16).

2. Entraînement linéaire (1)
avec un tube de guidage (2) qui est pourvu d'une fente longitudinale (12) traversant sa paroi (3) et dans lequel un piston (4) est monté coulissant dans la direction longitudinale, la fente longitudinale (12) étant délimitée par des flancs (13, 14) mutuellement parallèles, en vis-à-vis,
avec des dispositifs de fermeture (5, 6) montés côté extrémité sur le tube de guidage (2),
avec une barrette (19) qui traverse la fente longitudinale (12), et est reliée au piston (4),
un élément profilé (24) qui comprend une partie de contact (30) qui fait au moins partiellement saillie par rapport au flanc (13) étant fixé au flanc (13, 14) de la fente longitudinale (12) de telle sorte que la barrette (19), en présence d'une sollicitation latérale dirigée vers le flanc (13), vienne en appui contre une surface de contact (42) formant contre-appui et ne puisse pas venir en contact avec le flanc (13),
caractérisé
par le fait que la partie de contact (30) est montée élastiquement par raport à une butée.

3. Entraînement linéaire selon la revendication 1, caractérisé par le fait que l'élément profilé (24) est lié par complémentarité de formes au flanc (13) de la fente longitudinale (12).

4. Entraînement linéaire selon la revendication 1, caractérisé par le fait qu'il est prévu dans le flanc (13) de la fente longitudinale (12) au moins une gorge (22) dans laquelle l'élément profilé (24) est monté par une partie (26).

5. Entraînement linéaire selon la revendication 1, caractérisé par le fait que la partie de contact (30) est montée stationnaire par rapport au flanc (13) de la fente longitudinale (12).

6. Entraînement linéaire selon la revendication 1, caractérisé par le fait que la partie de contact (30) est en appui sur le flanc (13).

7. Entraînement linéaire selon la revendication 1, caractérisé par le fait que la partie de contact (30) est précontrainte élastiquement dans la direction opposée au flanc (13).

8. Entraînement linéaire selon la revendication 1, caractérisé par le fait que la partie de contact (30) recouvre en totalité le flanc (13).

9. Entraînement linéaire selon la revendication 1, caractérisé par le fait que la partie de contact (30) présente une faible élasticité.

10. Entraînement linéaire selon la revendication 1, caractérisé par le fait que la surface de contact (42) est plane.

11. Entraînement linéaire selon la revendication 1, caractérisé par le fait que la surface de contact (42) est disposée essentiellement parallèlement au flanc (13).

12. Entraînement linéaire selon la revendication 1, caractérisé par le fait que l'élément profilé (24) présente une lèvre longitudinale (48) qui s'étend sur la longueur de l'élément profilé (24), à laquelle est associé un évidement longitudinal (28) dans une face (27) du ruban d'étanchéité (16) tournée vers le flanc (13).

13. Entraînement linéaire selon la revendication 1, caractérisé par le fait que la partie d'encliquetage (25) est montée élastiquement en direction du flanc (13) et est précontrainte élastiquement dans la direction opposée au flanc (13).

14. Entraînement linéaire selon la revendication 1, caractérisé par le fait que l'élément profilé (24) est en matière plastique.

15. Entraînement linéaire selon la revendication 1, caractérisé par le fait que l'élément profilé (24) est fixé par matière au flanc (13)..
